# EUROPEAN PATENT SPECIFICATION

(11) **EP 1 771 308 B1**
(45) Date of publication and mention of the grant of the patent: **22.10.2008**
(21) Application number: 04806843.1
(22) Date of filing: 06.12.2004
(51) Int. Cl.: B60B 30/00, B23Q 3/18

(54) **DEVICE FOR CLAMPING IN CENTRED POSITION PARTS TO BE SUBJECTED TO MACHINING AND MACHINE TOOL COMPRISING SAID DEVICE**
VORRICHTUNG ZUM FESTKLEMMEN VON MASCHINELL ZU BEARBEITENDEN TEILEN IN ZENTRIERTER POSITION UND DIE VORRICHTUNG UMFASSENDE WERKZEUGMASCHINE
DISPOSITIF DE SERRAGE DANS DES PARTIES CENTREES SOUMISES A USINAGE ET MACHINE-OUTIL COMPRENANT LE DISPOSITIF

(30) Priority: 02.07.2004 IT PD20040177
(43) Date of publication of application: 11.04.2007
(73) Proprietor: Maus S.p.A., 35011 Campodarsego (IT)
(72) Inventor: SAMMARTIN, Roberto, I-35030 Selvazzano Dentro (IT); VALENTINI, Bruno, I-35012 Camposampiero (PD) (IT)
(74) Representative: Fabris, Stefano
(86) International application number: PCT/IT2004/000678
(87) International publication number: WO 2006/003683

(56) References cited:
- CH-A- 444 694
- DE-A1- 10 256 870
- US-A- 3 818 968
- US-A- 4 750 538

## Description

### Scope

The present invention relates to a device for centring and clamping parts to be subjected to machining according to the precharacterizing clause of main claim no. 1. The invention also provides a machine tool comprising said device.

### Technical background

The invention concerns in particular, although not exclusively, the specific technical object of centring parts to be subjected to machining, for example turning or other surface finishing, with the aim of effecting centring of the part relative to the geometric axis of rotation of the equipment or worktables typically provided in conventional machining centres. Although the invention may be used in any machining centre where it is necessary to centre parts with substantially axially symmetrical geometry, it was devised with particular reference to the centring of semi-finished vehicle wheels made from light alloy, in particular from aluminium alloy, said term being intended to denote the overall structure comprising rim and wheel, which is generally obtained as a semi-finished casting and is subjected to subsequent turning and surface finishing.

There is a necessity in this connection to centre the semi-finished part, this operation conventionally being performed by means of a three-point centring device in which three centring elements, typically of the jaw type, arranged at 120° to one another, are displaced along radial guides relative to geometric axis of the device to clamp the part in centred position.

Typical known applications provide the use of centring devices in which the travel in the radial direction of each centring element is limited to a range of a few millimetres. The maximum extent of said radial travel is conventionally within the range of 5 to 7 millimetres.

When such devices are used in processing lines in which the parts supplied to the machining centres exhibit, in random sequences, different dimensions within relatively wide dimensional ranges (in the case of wheels, the nominal diameter of the semifinished products may vary, for example, between 13 and 24 inches), the maximum extent of travel of the centring elements does not allow the entire dimensional range to be encompassed.

Furthermore, since it is preferable for it to be possible to supply the parts to the machining centres substantially randomly, so resulting in sequences of semi-finished parts which differ in dimensions from one another, the variation In the dimensions of the part to be machined makes setup, which is conventionally almost always performed manually, time-consuming and costly.

Document CH 444694 discloses an apparatus for fitting on and removing automobile tyres. Although this prior art is not explicitly directed to the field of the centring devices for parts to be subjected to machining, it discloses centring means with actuating and motor means associated thereto showing the features of the preamble of the main claim.

### Description of the invention

The problem underlying the present invention is to provide a device for clamping in centred position semi-finished parts to be subjected to machining, which device is structurally and functionally designed to overcome the shortcomings stated with reference to the cited prior art.

This problem has been solved by the invention by means of a device of the above-stated type as specified in the following claims.

### Brief description of the drawings

The features and advantages of the invention will emerge more clearly from the following detailed description of preferred exemplary embodiments which are illustrated in indicative, non-limiting manner with reference to the attached drawings in which:
- Figure 1 is a partial schematic front elevational view of a first example of a device for clamping parts in centred position according to the present invention,
- Figure 2 is another overall schematic diagram of the device of Figure 1,
- Figure 3 is a partial perspective view of the device of the preceding Figures,
- Figure 4 is a view corresponding to that of Figure 1 of a second exemplary embodiment of the invention,
- Figure 5 is an overall partial axially sectional view of the example of the device of Figure 4,
- Figure 6 is a perspective view of the device of Figures 4 and 5.

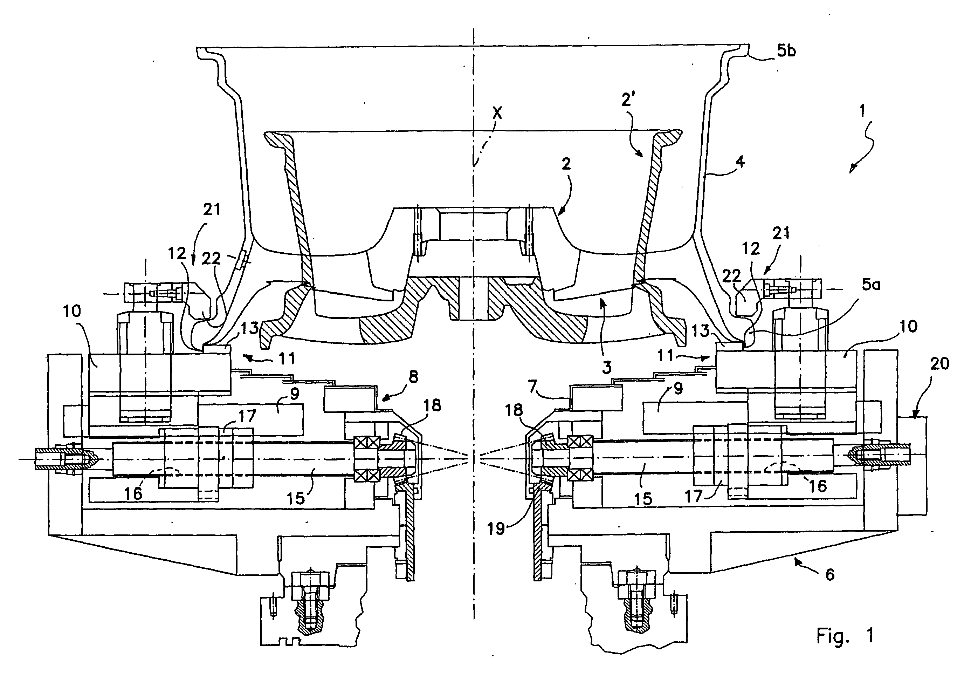

With initial reference to Figures 1 to 3, 1 denotes overall a first example of a device for centring and clamping (semi-finished or less than semi-finished) parts which are intended to be subjected to subsequent machining, said device being in accordance with the present invention. Said device is described below with particular reference to semi-finished vehicle wheels 2 made from light alloy, in particular from aluminium alloy, it nevertheless being understood that said application constitutes a preferred but non-limiting choice as the invention may equally effectively be applied in any case in which there is a requirement to centre and clamp parts of an axially symmetrical geometry (such as for example brake disks, flywheels, drums and others).

In the present context, the term "wheel" is intended to denote the overall rim and wheel structure for vehicles, typically provided with a perforated front portion 3 (comprising through-holes for attaching the rim to the vehicle's hub) from which there proceeds a wall 4 which extends almost cylindrically and comprises opposing circumferential edges 5a, 5b which project radially to define the contact surface of the wheel with the tyre.

The device 1 comprises a supporting frame 6 on which there is mounted a table 7 comprising a central through hole 8.

On the table 7, there are provided three guide elements 9 extending radially relative to the geometric central axis of the device, indicated X, and arranged at regular angular intervals (at 120° to one another).

Alternatively, other configurations are possible with a different number of guide elements and a corresponding angular interval.

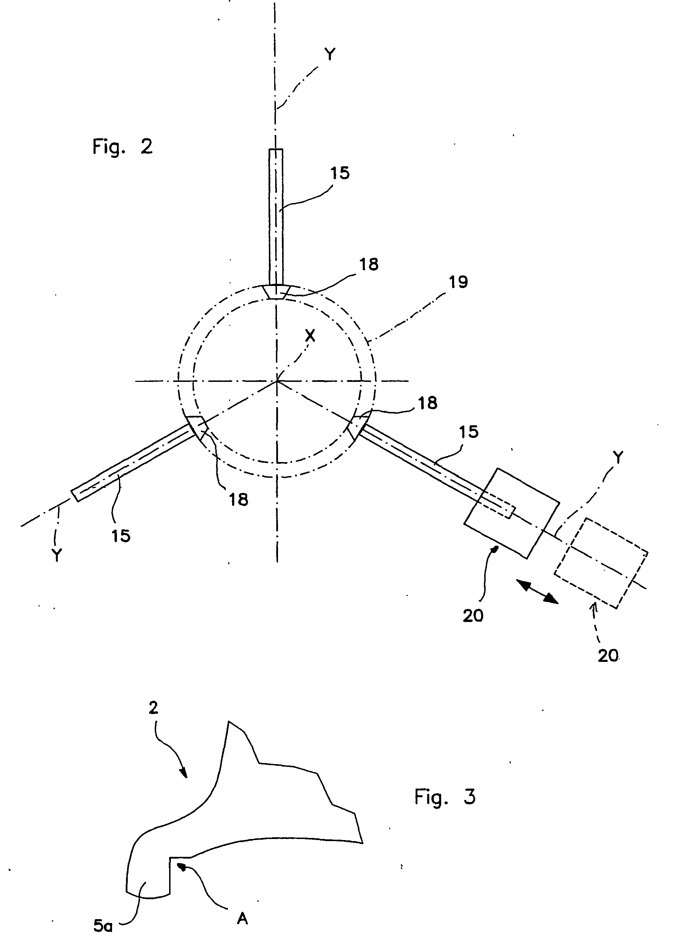

Each guide 9 is associated with a respective slide 10 of a corresponding centring element 11 such as to guide the latter along the respective radial direction (indicated Y in Figure 2) in a translational movement away from and towards the axis X.

The centring elements 11 are each structurally identical and only one of them will be described in detail below.

The slide 10 comprises, at one end, a projection 12 having an extension such as to interact with the edge 5a of the wheel following the radial movement of the slide and thus capable of drawing the wheel away from the axis X. The projection 12 may conveniently be the end of a removable block 13 attached to the slide 10, so likewise defining the vertical position of the part.

Actuating means are provided to move each slide 10, said means including an actuating element which conveniently takes the form of a manoeuvring rod 15 which extends axially and parallel to the radial direction Y of the corresponding centring element 11 and is supported rotatably on the table 7. The rod 15 is externally threaded along its axial portion and the corresponding screw mates with a respective internal thread 16 integral with the slide 10. More particularly, said screw is of the recirculating ball type and the corresponding associated mating internal thread is located in a lead nut structure 17 integral with the slide 10. As a result, the rotational movement of the manoeuvring rod 15 is converted into a translational movement of the lead nut 17, and integral therewith, of the slide 10, with the consequent displacement of the centring element 11 in the corresponding radial direction Y away from and towards the axis X.

The device 1 also comprises transmission means including in each manoeuvring rod a respective gear 18 keyed onto a free end of the rod. The three gears 18 are in meshing engagement with a toothed wheel 19, such that the rotational motion of one of said manoeuvring rods 15 is transmitted synchronously to the other manoeuvring rods. Per se conventional devices are also provided for recovering or eliminating play in the kinematic connections which are present.

Each gear 18 conveniently defines with the toothed wheel 19 a gear pair with orthogonal axes assuming the form of a bevel wheel and pinion.

A motor unit is designated 20 and shown only schematically in the drawings, which motor unit is provided with its own independent movement for meshing and is operationally associated with one of the manoeuvring rods 15 in order to transmit to the latter rotational motion around the axis thereof. Thanks to the mating between the pinions 18 and wheel 19, the rotational motion imparted by the motor unit 20 to one of the rods 15 is transmitted, in particular in synchronized manner, to the other manoeuvring rods, so ensuring synchronous movement of the three centring elements 11. It should be noted that the motor unit is attached to the machine, being mobile between preselected working positions (at least a second position is shown in dashed lines in Figure 2).

Clamping means 21 for the part subjected to centring are also provided on each slide 10, said clamping means comprise a clamping foot 22 mounted in articulated manner on the slide in such a manner as to be displaceable towards an operating position in which it is pressed on the wheel 2 at the edge 5a in order to ensure clamping thereof:

It is also provided that each slide 10 may be clamped relative to its own guide by means of respective clamping means 23 comprising for example appropriately sized and supplied hydraulic or pneumatic cylinders.

Thanks to the presence of these latter clamping means, each centring element is reversibly clamped relative to the table 7 once the desired centring position has been reached (along the direction Y).

In operation, it is intended that the semi-finished wheel 2 be initially rested on table 7. In this phase, the centring elements 11 are moved back towards the axis X with identical radial positioning relative to said axis, but such that the projections 12 are located between the axis X and the peripheral edge 5a of the wheel.

In a subsequent phase, it is provided that the three centring elements 11 are moved in mutually synchronized manner along their respective radial directions Y away from the axis X by actuation of the motor unit 20 which is attached to the machine and is provided with its own meshing movement. The position is checked by a position sensor (for example an encoder) and

by verification of the clamping torque. The motor is preferably of the controlled movement type, such that the rotation thereof and thus the translational travel of the respective slide 10 associated therewith may be controlled with accuracy and precision.

In particular, it is provided that the end of each centring element (block 13) acts on a previously machined surface of the wheel, indicated with A in the drawings and comprising for example three surface portions having cross-sections arranged at 120° relative to one another, as shown in Figure 3.

Once the centred position of the wheel relative to the axis X has been reached, the movement of the centring elements 11 is stopped and the clamping means 21 are activated with displacement of each foot 22 onto the wheel 2. At the same time, each slide is clamped relative to its own guide on the table 7 by actuation of the clamping means 23.

Once the semi-finished wheel has been clamped in the centred position, 20 will stop and the machining phases planned for the corresponding processing cycles are initiated.

It should first of all be noted how, with the device of the invention, it is possible to effect centring of parts in a wide range of dimensions of parts and the consequent length of travel required of the centring elements. By way of example, Figure 1 shows another semi-finished wheel 2', differing from the wheel 2, of an appreciably smaller size than the wheel 2, but which may equally readily be clamped in a centred position by means of the device 1.

It should also be noted how the device according to the invention is of dimensions such that the semi-finished product is readily accessible, in particular with regard to the front portion 3 of the wheel, through the central hole 8 of the supporting frame 6. In this connection, it is provided that the toothed wheel 19 be centrally hollow (Figure 1) in order to facilitate access to the part and the possible discharge of sprue (arising from preceding casting operations).

This ease of access makes it possible to perform subsequent phases in the machining of the part with particular speed and without requiring repositioning of the semi-finished product.

One principal advantage which is achieved is that the centring device according to the invention enables improved flexibility and versatility in part centring and clamping operations, in particular ensuring speed and accuracy in centring parts which are of different sizes and dimensions (for example semi-finished wheels of different diameters). This advantageously makes it possible to incorporate said device into machining centres which it is intended to supply with different types of parts for machining (in particular of different dimensions relative to one another) and in accordance with substantially random sequences. These features, which are demanded by the market, make it possible to respond in "real time" to market requirements.

Another advantage consists in the improved accessibility to the semi-finished part provided by the device of the invention together with a smaller overall size relative to known solutions.

Another equally significant advantage resides in the fact that it is possible to achieve true centring of the part by using surfaces (A) thereof which have previously been machined. It is provided that such surfaces are machined at the same time as the wheel fastening holes, so enabling ideal geometry and consequently a lower level of imbalance of the part.

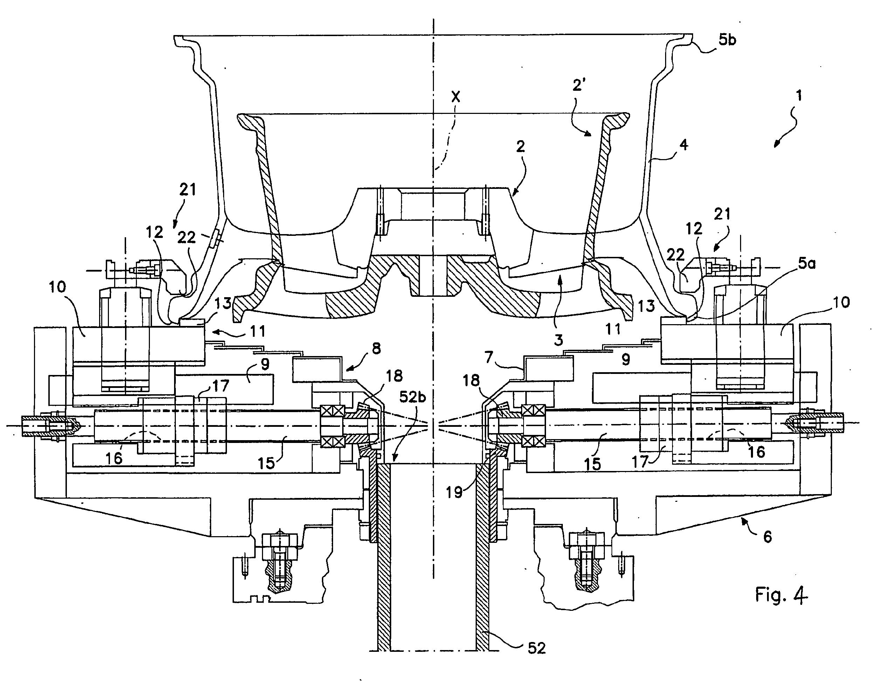

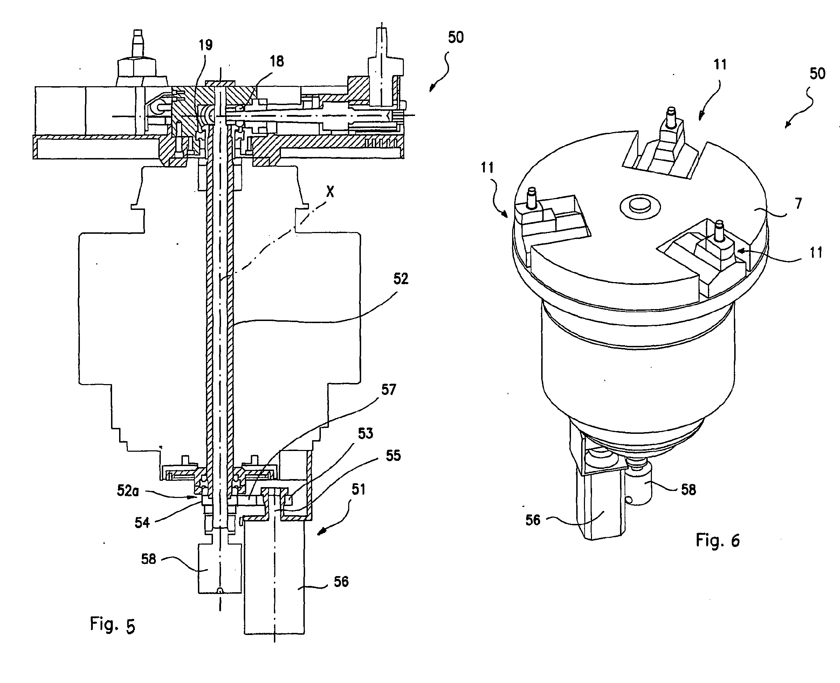

With reference to Figures 4 to 6, 50 denotes overall a second example of a device for centring and clamping parts to be subjected to subsequent machining, produced in accordance with the present invention, in which details similar those of the preceding example are denoted by the same reference numerals.

The device 50 primarily differs from that described in the preceding example in that a motor unit, denoted overall 51, is provided which is not directly associated with any one of the centring elements, but is instead operationally associated with an axial end 52a of a transmission shaft 52, to the opposite end 52b of which is keyed the toothed wheel 19.

The shaft 52 extends, coaxially with the main axis X, from the opposite side of the table 7 relative to the operational zone for centring and clamping the part and is made with an axially hollow tubular structure. As a result, the motor unit 51 accordingly remains arranged beneath the table 7. 53 denotes a first transmission pulley, which is integral for rotation with the shaft 52 at the end 52a thereof. A corresponding second pulley 54 is keyed onto the output shaft 55 of a motor 56 belonging to the motor unit 51 provided for actuation of the centring elements 11. A continuous annular transmission belt 57 is provided between the pulleys 53 and 54. It is understood that kinematic transmission means equivalent to said belt transmission may alternatively be provided between the motor 56 and the shaft 52.

A clamping oil distributor is denoted 58 and shown only schematically, said distributor being provided at the end 52 of the shaft, the lines from which are connected with the axial cavity of the shaft and through which the oil is conveyed upwards into the zone of the table 7 for the clamping function.

In operation, after rotation of the motor 56 and consequently of the shaft 52 and, integral therewith, of the toothed wheel 19, corresponding and synchronized rotational movements are transmitted to the manoeuvring rods 15 and, thanks to the mating between the pinions 18 and wheel 19, a synchronous translational movement of the three centring elements 11 is effected, these elements operating in entirely similar manner to that described in relation to the preceding example.

In relation to this second exemplary embodiment of the invention, in addition to the advantages already outlined in relation to the preceding Example, it should be emphasised how the placement of the motor unit provides the advantage of limiting the transverse dimensions of the device, in particular in the outer radial zones corresponding to the centring elements.

Another advantage consists in the fact that there is a reduction in the rotating masses on the worktable (by providing the motor below the table and not integral for rotation therewith), with a consequent reduction in inertial effects due to the centrifugal forces generated on rotation of the table.

## Claims

1. A device for clamping in centred position parts to be subjected to machining, comprising:
- a part centring device on a worktable (7) including at least three centring elements (11) with a regular angular spacing which are capable of coming into contact with the part to displace it into a centred position, each of the centring elements (11) being displaceable along a predetermined radial direction (Y), said radial directions (Y) intersecting on the geometric part centring axis (X),
- actuating means associated with each respective centring element (11) for operational actuation thereof in the translational movement along the corresponding radial direction (Y), said actuating means comprising, for each centring element (11), a respective actuating element (15) capable of being driven in a rotational motion and respective first motion transmission means (16, 17) capable of converting the rotational motion of The actuating element into a translational motion of the corresponding centring element (11) along the corresponding radial direction (Y), and
- second motion transmission means (18, 19) between said actuating elements (15) capable of synchronously transmitting the rotational motion from one of said actuating elements (15) to the other actuating elements, so as to permit synchronized translational movement of the centring elements (11) along the respective radial translation directions (Y),
- said first motion transmission means comprising, for each centring element (11), mating of the screw/internal thread type between the centring element (11) and the respective actuating element (15),
- said actuating element comprising a manoeuvring rod (15) comprising externally a thread constituting said screw,
- said second transmission means comprising, for each centring element (11), a respective first gear (18) integral for rotation with the corresponding manoeuvring rod (15), said first gears (18) all meshing with a common second gear (19), such that the rotational motion of one of said manoeuvring rods (15) is synchronously transferred to all the other manoeuvring rods (15),
- motor means (51) being provided to be operationally associated with said common second gear (19), such that the rotational motion of said second gear (19) is synchronously transferred to each respective manoeuvring rod (15) of the device,
- a transmission shaft (52) being provided to be kinematically connected to said motor means (51) and with which said second gear (19) is integral for rotation, said shaft extending coaxially with the main geometric axis (X) of the device, **characterized in that**
said transmission shaft (52) is of hollow tubular construction,
and **in that** a clamping oil distributor is provided at one end of the shaft (52), the lines from which being connected with the axial cavity of the shaft and through which the oil being conveyed upwards into the zone of the table (7) for the clamping function of the parts to be subjected to machining.

2. A device according to claim 1, comprising guide means (9) associated with each respective centring element (11) to guide the movement thereof along the respective radial direction (Y) between a first non-operating position close to the geometric centring axis (X) and a second operating position, remote from the geometric axis, in which the centring element (11) interacts with the part until the part is centred relative to the axis (X).

3. A device according to claim 1, in which said screw is of the recirculating ball type.

4. A device according to claim 1, in which said internal thread is located in a lead nut structure (17) integral with the corresponding centring element (11).

5. A device according to claim 1, in which said second gear (19) and each of said first gears (18) constitutes a pair of gears with orthogonal axes respectively taking the form of a bevel wheel and pinion.

6. A device according to claim 5, in which said bevel wheel (19) is coaxial with the geometric centring axis (X) of the device.

7. A device according to one or more of the preceding claims, in which motor means (20) are associated with at least one of said manoeuvring rods (15) to drive the corresponding screw in rotation.

8. A device according to one or more of the preceding claims, in which between said motor means (51) and said transmission shaft (52) there is provided a belt transmission (57) close to the end of the shaft (52) axially opposite the end of the shaft connected to said second gear (19).

9. A device according to one or more of the preceding claims, comprising, on each centring element (11), first clamping means (21) for selectively clamping the part relative to the corresponding centring element (11) once the preselected centring position is reached.

10. A device according to claim 9, comprising, for each centring element (11), second clamping means (23) for selectively clamping the corresponding centring element (11) relative to worktable in the preselected position along the radial translation direction (Y) of the centring element (11).

11. A machine tool for machining parts, comprising a device for clamping parts in centred position to be subjected to machining, according to one of the preceding claims.

## Patentansprüche

1. Vorrichtung zum Festklemmen von maschinell zu bearbeitenden Teilen in zentrierter Position, umfassend:
- eine das Teil zentrierende Vorrichtung auf einem Arbeitstisch (7) mit zumindest drei Zentrierelementen (11) mit einem regelmäßigen Winkelabstand, die mit dem Teil in Kontakt gelangen können, um es in eine zentrierte Position zu verschieben, wobei jedes der Zentrierelemente (11) entlang einer vorbestimmten radialen Richtung (Y) verschiebbar ist, wobei sich die radialen Richtungen (Y) auf der geometrischen Zentrierachse (X) des Teils schneiden,
- eine Betätigungseinrichtung, die mit jedem Zentrierelement (11) in Verbindung steht, für dessen betriebsfähige Betätigung in der translatorischen Bewegung entlang der entsprechenden radialen Richtung (Y), wobei die Betätigungseinrichtung für jedes Zentrierelement (11) ein entsprechendes Betätigungselement (15), das zu einer Drehbewegung angetrieben werden kann, und eine entsprechende erste Bewegungsübertragungseinrichtung (16, 17) umfasst, welche die Drehbewegung des Betätigungselements in eine translatorische Bewegung des entsprechenden Zentrierelements (11) entlang der entsprechenden radialen Richtung (Y) umwandeln kann, und
- eine zweite Bewegungsübertragungseinrichtung (18, 19) zwischen den Betätigungselementen (15), welche die Drehbewegung synchron von einem der Betätigungselemente (15) zu den anderen Betätigungselementen übertragen kann, um so eine synchronisierte translatorische Bewegung der Zentrierelemente (11) entlang der entsprechenden radialen Verlagerungsrichtung (Y) zu ermöglichen,
- wobei die erste Bewegungsübertragungseinrichtung für jedes Zentrierelement (11) eine Übereinstimmung des Schrauben/Innengewindetyps zwischen dem Zentrierelement (11) und dem entsprechenden Betätigungselement (15) aufweist.
- wobei das Betätigungselement eine Bewegungsstange (15) mit einem externen Gewinde, welche die Schraube bildet, umfasst,
- wobei die zweite Übertragungseinrichtung für jedes Zentrierelement (11) ein erstes Zahnrad (18) umfasst, eingebaut zur Drehung mit der entsprechenden Bewegungsstange (15), wobei die ersten Zahnräder (18) alle mit einem gemeinsamen zweiten Zahnrad (19) kämmen, so dass die Drehbewegung einer der Bewegungsstangen (15) synchron auf alle anderen Bewegungsstangen (15) übertragen wird,
- eine Motoreinrichtung (51), die vorgesehen ist, um betriebsfähig mit dem gemeinsamen zweiten Zahnrad (19) in Verbindung zu stehen, so dass die Drehbewegung des zweiten Zahnrads (19) synchron auf jede entsprechende Bewegungsstange (15) der Vorrichtung übertragen wird,
- eine Getriebewelle (52), die vorgesehen ist, um kinematisch mit der Motoreinrichtung (51) verbunden zu werden, und mit der das zweite Zahnrad (19) zur Drehung verbunden ist, wobei sich die Welle koaxial zur geometrischen Hauptachse (X) der Vorrichtung erstreckt, **dadurch gekennzeichnet, dass**
- die Getriebewelle (52) eine hohle rohrförmige Konstruktion ist,
- und dass ein Festklemm-Ölverteiler an einem Ende der Welle (52) vorgesehen ist, dessen Leitungen mit dem axialen Hohlraum der Welle verbunden sind, und durch die Öl nach oben in die Zone des Tisches (7) für die Festklemmfunktion der maschinell zu bearbeitenden Teile gefördert wird.

2. Vorrichtung nach Anspruch 1, umfassend eine Führungseinrichtung (9), die mit jedem entsprechenden Zentrierelement (11) in Verbindung steht, um dessen Bewegung entlang der entsprechenden radialen Richtung (Y) zwischen einer ersten Nichtbetriebsposition nahe der geometrischen Mittelachse (X) und einer zweiten Betriebsposition entfernt von der geometrischen Achse zu führen, wobei das Zentrierelement (11) mit dem Teil zusammenwirkt, bis das Teil in Bezug auf die Achse (X) zentriert ist.

3. Vorrichtung nach Anspruch 1, wobei die Schraube vom Typ der umlaufenden Kugelrollspindel ist.

4. Vorrichtung nach Anspruch 1, wobei das Innengewinde in einer Muttergewinde-Struktur (17), die mit dem entsprechenden Zentrierelement (11) gebildet ist, angeordnet ist.

5. Vorrichtung nach Anspruch 1, wobei das zweite Zahnrad (19) und jedes der ersten Zahnräder (18) ein Paar von Zahnrädern mit orthogonalen Achsen bildet, das jeweils die Form eines Kegelrads mit Ritzel annimmt.

6. Vorrichtung nach Anspruch 5, wobei das Kegelrad (19) koaxial zur geometrischen Mittelachse (X) der Vorrichtung ist.

7. Vorrichtung nach einem oder mehreren der vorstehenden Ansprüche, wobei die Motoreinrichtung (20) mit zumindest einer der Bewegungsstangen (15) in Verbindung steht, um die entsprechende Schraube zur Drehung anzutreiben.

8. Vorrichtung nach einem oder mehreren der vorstehenden Ansprüche, wobei zwischen der Motoreinrichtung (51) und der Getriebewelle (52) eine Riemenübertragung (57) nahe dem Ende der Welle (52) axial gegenüber dem Ende der Welle, das mit dem zweiten Zahnrad (19) verbunden ist, vorgesehen ist.

9. Vorrichtung nach einen oder mehreren der vorstehenden Ansprüche, umfassend eine erste Festklemmeinrichtung (21) auf jedem Zentrierelement (11) zum wahlweisen Festklemmen des Teils in Bezug auf das entsprechende Zentrierelement (11), sobald die vorbestimmte Zentrierposition erreicht ist.

10. Vorrichtung nach Anspruch 9, umfassend eine zweite Festklemmeinrichtung (23) für jedes Zentrierelement (11) zum wahlweisen Festklemmen des entsprechenden Zentrierelements (11) in Bezug auf den Arbeitstisch in der vorbestimmten Position entlang der radialen Verlagerungsrichtung (Y) des Zentrierelements (11).

11. Werkzeugmaschine zur maschinellen Bearbeitung von Teilen, umfassend eine Vorrichtung zum Festklemmen von maschinell zu bearbeitenden Teilen in einer zentrierten Position gemäß einem der vorstehenden Ansprüche.

## Revendications

1. Un dispositif pour serrer en position centrée des pièces destinées à être usinées, comprenant :
- un dispositif de centrage de pièce, sur une table de travail (7), comportant au moins trois éléments de centrage (11) à espacement angulaire régulier aptes à entrer en contact avec la pièce pour la déplacer dans une position centrée, chacun des éléments de centrage (11) étant mobile selon une direction radiale (Y) prédéterminé, lesdites directions radiales (Y) se croisant au niveau de l'axe géométrique (X) de centrage de la pièce,
- des moyens d'actionnement associés à chaque élément de centrage (11) respectif pour un actionnement opérationnel de celui-ci dans le mouvement de translation le long de la direction radiale correspondante (Y), lesdits moyens d'actionnement comprenant, pour chaque élément de centrage (11), un élément d'actionnement (15) respectif apte à être entraîné dans un mouvement de rotation et des premiers moyens de transmission de mouvement (16, 17) respectifs aptes à convertir le mouvement de rotation de l'élément d'actionnement en un mouvement de translation de l'élément de centrage (11) correspondant le long de la direction radiale (Y) correspondante, et
- des seconds moyens de transmission (18, 19) disposés entre lesdits éléments d'actionnement (15) aptes à transmettre de manière synchronisée le mouvement de rotation d'un desdits éléments d'actionnement (15) aux autres éléments d'actionnement, pour permettre le mouvement de translation synchronisé des éléments de centrage (11) le long des directions de translation radiales (Y) respectives,
- lesdits premiers moyens de transmission de mouvement comprenant, pour chaque élément de centrage (11), un engagement de type vis/filetage intérieur entre l'élément de centrage (11) et l'élément d'actionnement (15) respectif,
- ledit élément d'actionnement comprenant une tige de manoeuvre (15) comportant extérieurement un filetage formant ladite vis,
- lesdits seconds moyens de transmission comprenant, pour chaque élément de centrage (11), un premier engrenage (18) respectif solidaire en rotation avec la tige de manoeuvre correspondant (15), lesdits premiers engrenages (18) engrenant tous avec un second engrenage (19) commun, de sorte que le mouvement de rotation d'une desdites tiges de manoeuvre (15) est transmis de manière synchronisée à toutes les autres tiges de manoeuvre (15),
- des moyens de motorisation (51) étant fournis pour être associés en fonctionnement avec ledit second engrenage (19) commun, de sorte que le mouvement de rotation dudit second engrenage (19) est transmis de manière synchronisée à chaque tige de manoeuvre (15) respective du dispositif,
- un arbre de transmission (52) étant fourni pour être cinématiquement lié auxdits moyens de motorisation (51) et avec lequel ledit second engrenage (19) est solidaire en rotation, ledit arbre s'étendant coaxialement à l'axe géométrique (X) principal du dispositif,
**caractérisé en ce que**
ledit arbre de transmission (52) est de construction tubulaire creuse, et **en ce qu'**un distributeur d'huile de serrage est fourni à une des extrémités de l'arbre (52), les canalisations partant de celui-ci étant connectées à la cavité axiale de l'arbre et l'huile étant remontée par elles vers la zone de la table (7) pour la fonction de serrage des pièces destinées à être usinées.

2. Un dispositif selon la revendication 1, comprenant des moyens de guidage (9) associés avec chaque élément de centrage (11) respectif pour guider le mouvement de celui-ci le long de la direction radiale (Y) respective entre une première position de non-fonctionnement à proximité de l'axe géométrique (X) de centrage et une seconde position de fonctionnement, à distance de l'axe géométrique, dans laquelle l'élément de centrage (11) interagit avec la pièce jusqu'à ce que la pièce soit centrée vis-à-vis de l'axe (X).

3. Un dispositif selon la revendication 1, dans lequel ladite vis est de type à recirculation de billes.

4. Un dispositif selon la revendication 1, dans lequel ledit filetage intérieur est situé dans une structure d'écrou menant (17) solidaire de l'élément de centrage (11) correspondant.

5. Un dispositif selon la revendication 1, dans lequel ledit second engrenage (19) et chacun desdits premiers engrenages (18) constitue une paire d'engrenages avec des axes orthogonaux respectivement prenant la forme d'une roue conique et d'un pignon conique.

6. Un dispositif selon la revendication 5, dans lequel ladite roue conique (19) est coaxiale avec l'axe géométrique (X) de centrage du dispositif.

7. Un dispositif selon l'une ou plusieurs des revendications précédentes, dans lequel des moyens de motorisation (20) sont associés avec au moins une desdites tiges de manoeuvre (15) pour entraîner en rotation l'écrou correspondant.

8. Un dispositif selon l'une ou plusieurs des revendications précédentes, dans lequel entre lesdits moyens de motorisation (51) et ledit arbre de transmission (52) est fournie une courroie de transmission (57) à proximité de l'extrémité de l'arbre (52) axialement opposée à l'extrémité de l'arbre liée audit second engrenage (19).

9. Un dispositif selon l'une ou plusieurs des revendications précédentes, comprenant, sur chaque élément de centrage (11), des premiers moyens de serrage (21) pour sélectivement serrer la pièce par rapport à l'élément de centrage (11) correspondant lorsque que la position de centrage présélectionnée est atteinte.

10. Un dispositif selon la revendication 9, comprenant, pour chaque élément de centrage (11), des seconds moyens de serrage (23) pour sélectivement serrer l'élément de centrage (11) correspondant par rapport à la table de travail dans la position présélectionnée le long de la direction de translation radiale (Y) de l'élément de centrage (11).

11. Une machine-outil pour usiner des pièces, comprenant un dispositif pour serrer des pièces en position centrée destinées a être usinées, selon l'une des revendications précédentes.
